(19) Europäisches Patentamt
European Patent Office
Office européen des brevets

(11) **EP 4 150 235 B1**

(12) **EUROPÄISCHE PATENTSCHRIFT**

(45) Veröffentlichungstag und Bekanntmachung des Hinweises auf die Patenterteilung:
**25.09.2024  Patentblatt 2024/39**

(21) Anmeldenummer: **21726059.5**

(22) Anmeldetag: **06.05.2021**

(51) Internationale Patentklassifikation (IPC):
**F16H 57/01** *(2012.01)*      **F04B 51/00** *(2006.01)*
**F04B 49/06** *(2006.01)*      **F04B 49/10** *(2006.01)*

(52) Gemeinsame Patentklassifikation (CPC):
**F16H 57/01; F04B 49/065; F04B 49/106;**
F04B 2203/0201; F04B 2203/0207; F04B 2205/01;
F04B 2205/05; F04B 2205/09; F04B 2205/14

(86) Internationale Anmeldenummer:
**PCT/EP2021/061993**

(87) Internationale Veröffentlichungsnummer:
**WO 2021/228677 (18.11.2021 Gazette 2021/46)**

(54) **VERFAHREN ZUM BESTIMMEN EINES MOMENTANEN VERSCHLEISSZUSTANDES EINER HYDROSTATISCHEN MASCHINE**

METHOD FOR DETERMINING A PRESENT STATE OF WEAR OF A HYDROSTATIC MACHINE

PROCÉDÉ DE DÉTERMINATION D'UN ÉTAT D'USURE ACTUEL D'UNE MACHINE HYDROSTATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2020  DE 102020112660**

(43) Veröffentlichungstag der Anmeldung:
**22.03.2023  Patentblatt 2023/12**

(73) Patentinhaber: **MOOG GmbH**
**71034 Böblingen (DE)**

(72) Erfinder:
• BECHER, Dirk
  **71154 Nufringen (DE)**
• SCHRAFT, Jacques Philippe
  **70437 Stuttgart (DE)**

(74) Vertreter: **Wittmann, Ernst-Ulrich**
**Withers & Rogers LLP**
**Kaulbachstrasse 114**
**80802 München (DE)**

(56) Entgegenhaltungen:
EP-A1- 2 655 895      WO-A1-2019/092122
DE-A1- 102011 115 650

**Beschreibung**

Die vorliegende Erfindung betrifft ein Verfahren zum Bestimmen eines momentanen Verschleißzustandes einer hydrostatischen Maschine. Zudem umfasst die vorliegende Erfindung eine elektrohydrostatische Pumpenvorrichtung. Hydrostatische Maschinen dienen zum Erzeugen eines Volumenstromes eines Fluid. Das besagte Fluid stellt in bekannten Anwendungen eine Hydraulikflüssigkeit dar.

Hydrostatische Maschinen sind mechatronische Systeme und im Stand der Technik bekannt. Hydrostatische Maschinen weisen wenigstens eine hydrostatische Pumpe und einen Antrieb auf. Die genannten hydrostatischen Pumpen weisen im Inneren bewegliche Teile auf, welche sich während des Betriebes entlang der Oberflächen anderer Teile der hydrostatischen Pumpe zu einander bewegen oder bewegt werden. Die dabei entstehende Reibung zwischen den Oberflächen kann mittel- oder langfristig über die Lebensdauer der hydrostatischen Pumpe zu einer Abnutzung bzw. Verschleiß der hydrostatischen Pumpe führen. Der Verschleiß an der hydrostatischen Pumpe kann dazu führen, dass die Leckage der hydrostatischen Pumpe zunimmt. Dies kann zu einer Verminderung bzw. Abnahme des Volumenstroms an der Hochdruckseite der hydrostatischen Pumpe durch die aus der Leckage resultierende verringerte Pumpleistung führen. Eine Abnahme des Volumenstroms an der Hochdruckseite der hydrostatischen Pumpe kann zu einer Verringerung der Bewegungsgeschwindigkeit der mittels der Hydraulikflüssigkeit angetriebenen Hydraulikkomponenten, beispielsweise einer reduzierten Bewegungsgeschwindigkeit eines Hydraulikzylinders führen. Zudem kann der Verschleiß in der hydrostatischen Pumpe dazu führen, dass sich die Reibung zwischen den beweglichen Oberflächen im Inneren der hydrostatischen Pumpe erhöht. Eine Erhöhung der Reibung kann dazu führen, dass sich das Antriebsmoment zum Betreiben einer hydrostatischen Pumpe ebenfalls erhöht.

Im Stand der Technik bekannte hydrostatische Pumpen weisen den Nachteil auf, dass ihr jeweiliger Zustand, insbesondere ihr Verschleißzustand nicht in jeder Phase der Anwendung bekannt ist. Daher ist auch die momentane Ist-Leistung der hydrostatischen Pumpe nicht bekannt bzw. kann nicht mit 100% Genauigkeit eine Aussage über diese getroffen werden. Für einen Betreiber der hydrostatischen Pumpe bzw. der Maschine wäre es von Vorteil, Kenntnisse über den aktuellen Verschleißzustand der hydrostatischen Maschine zu erhalten. Mit dieser entsprechenden Kenntnis kann eine verschleißoptimierte Wartung der hydrostatischen Maschine vorgenommen werden. Im Stand der Technik ist kein System bekannt, welches während des Betriebes der hydrostatischen Pumpe, also ohne die Notwendigkeit, die hydrostatische Maschine in einem definierten Betriebspunkt zu betreiben, also bei definierter Drehzahl der hydrostatischen Pumpe, definierten Druck und definierter Fluidviskosität, eine entsprechende Verschleißmessung der hydrostatischen Maschine durchzuführen.

Aus der WO 2019/092122 A1 ist ein Verfahren bekannt, mit welchem der Verschleißzustand einer hydrostatischen Pumpe bestimmt werden kann. Das Verfahren beruht darauf, dass auf Basis von gemessenen Systemparametern ein Modell einer hydrostatischen Pumpe parametriert wird, welches den theoretischen Volumenstrom einer fabrikneuen hydrostatischen Pumpe für entsprechende Betriebsparameter berechnet. Der ermittelte Volumenstrom wird in ein Verhältnis zu einem messtechnisch ermittelten Ist-Volumenstrom gesetzt und resultiert in einen Wert, welcher dem Gesundheitsindex der hydrostatischen Pumpe entspricht.

Das aus der WO 2019/092122 A1 bekannte Verfahren weist den Nachteil auf, dass bei einem Auftreten einer zusätzlichen Leckage im hydraulischen Antriebssystem eben eine Abnahme des Volumenstroms detektiert werden kann, diese detektierte Abnahme des Volumenstroms aber nicht eindeutig der hydrostatischen Maschine zugeordnet werden kann. Beispielsweise kann eine Leckage an einem der Ventile oder dem Hydraulikzylinder ebenfalls zu einer Abnahme des Gesundheitsindexes der hydrostatischen Maschine führen.

DE 10 2011 115 650 A1 zeigt ein Verfahren zur Diagnose, insbesondere zur Zustands- und/oder Fehlerdiagnose, einer hydrostatischen Verdrängermaschine. Die Diagnose erfolgt dabei in Abhängigkeit einer Sprungantwort eines Gehäusedruckes, die aus einer Verstellung einer Last der hydrostatischen Verdrängermaschine gemäß einer Sprungfunktion resultiert. Gezeigt ist weiterhin eine hydraulische Anordnung mit einer hydrostatischen Verdrängermaschine zur Versorgung eines Verbrauchers und mit einer Steuereinheit, wobei über die Steuereinheit eine Last der Verdrängermaschine gemäß einer Sprungfunktion verstellbar und eine Diagnose der hydrostatischen Verdrängermaschine in Abhängigkeit einer Sprungantwort eines Gehäusedrucks durchführbar ist.

EP 2 655 895 A1 zeigt einen hydraulischen Antrieb für einen hydraulischen Verbraucher oder für ein hydraulisches System mit einer Verstellpumpe, die mechanisch mit einem drehzahlvariablen Antriebsmotor gekoppelt ist, und einer Steuerung zur Einstellung zumindest der Leistung der Pumpe und optional der Drehzahl des Antriebsmotors. Es ist eine Drehmomenterfassungs- oderermittlungseinrichtung vorgesehen, die ein aktuelles Abtriebsdrehmoment des Antriebsmotors erfasst oder berechnet, wobei in Reaktion darauf die Leistung der Pumpe auf einen Wert eingestellt wird, bei dem das aktuelle Abtriebsdrehmoment auf oder unter einem eingestellten Maximalwert liegt.

Ausgehend davon, liegt der vorliegenden Erfindung die technische Aufgabe zugrunde, die im Stand der Technik bekannten Nachteile wenigstens teilweise zu überwinden, um eine Lokalisierung der Ursache für die Abnutzung bzw. den Verschleiß zu verbessern.

Diese Aufgabe wird durch die Gegenstände der unabhängigen Patentansprüche gelöst, insbesondere durch ein Verfahren und eine elektrohydrostatische Pumpenvorrichtung. Vorteilhafte Ausführungsformen der Erfindung sind in den abhängigen Patentansprüchen und der nachfolgenden Beschreibung beschrieben.

Gemäß einem ersten Aspekt bezieht sich die Erfindung auf ein Verfahren zum Bestimmen eines momentanen Verschleißzustandes einer hydrostatischen Maschine während des Betriebes der hydrostatischen Maschine. Die hydrostatische Maschine weist einen Antrieb mit variabler Drehzahl auf. Zudem weist die hydrostatische Maschine eine hydrostatische Pumpe auf. Der Antrieb ist ausgebildet die hydrostatische Pumpe zum Erzeugen eines Volumenstroms eines Fluids anzutreiben. Der Antrieb kann als ein elektrischer Antrieb, beispielsweise als ein Drehstrommotor usw. ausgebildet sein. Der Antrieb stellt ein benötigtes Ist-Drehmoment an die hydrostatische Pumpe bereit. Durch das aufgebrachte Drehmoment wird durch die hydrostatische Pumpe ein definierter Hydraulikdruck erzeugt. Zudem ist die hydrostatische Maschine mit einem Fluidtransportkanal verbunden, in dem ein Fluid von der hydrostatischen Maschine angetrieben transportiert wird. Die hydrostatische Maschine weist eine Verbindung, insbesondere eine fluidtransportierende Verbindung zu einem hydraulischen Antriebssystem auf. Das hydraulische Antriebssystem umfasst den Fluidtransportkanal. Über den Fluidtransportkanal wird das Fluid, insbesondere Hydraulikflüssigkeit zu den entsprechenden Hydraulikkomponenten des hydraulischen Antriebsystems für deren Antrieb transportiert. Das Verfahren umfasst die folgenden Verfahrensschritte:

In einem ersten Verfahrensschritt wird ein erstes Drehmoment des Antriebes, ein Wert für ein erstes Drehmoment des Antriebes bei einem vorgegebenen Antriebsvektor bestimmt. In einem weiteren Schritt wird ein zweites Drehmoment des Antriebes, ein Wert für ein zweites Drehmoment des Antriebes bei dem vorgegeben Antriebsvektor unter Verwendung eines ersten Rechenverfahrens ermittelt. In einem weiteren Schritt wird der momentane Verschleißzustand der hydrostatischen Maschine unter Verwendung eines zweiten Rechenverfahren bestimmt. In dem zweiten Rechenverfahren wird das erste bestimmte Drehmoment und das zweite ermittelte Drehmoment in Beziehung zu einander gesetzt. Unter dem zueinander in Beziehung setzen ist im Sinne der vorliegenden Erfindung das Ermitteln des Verhältnisses zwischen einem Ist-Drehmoment des Antriebs und eines berechneten Drehmoments, insbesondere des durch das erste Rechenverfahrens ermittelte Drehmoment des Antriebes zu verstehen. Über das Verhältnis können die Abnutzung bzw. der Verschleiß der hydrostatischen Maschine beurteilt werden. Es wird erfindungsgemäß ein Gesundheitsindex ermittelt.

Der vorliegenden Erfindung liegt die Kenntnis zu Grunde, dass ein Bedarf für die Ermittlung des tatsächlichen Gesundheitsindexes einer hydrostatischen Maschine unter Berücksichtigung, dass weitere Leckagen in dem hydraulischen System entsprechend ermittelte Werte für den Verschleiß oder Abnutzung verfälschen können, besteht. Derzeit bekannte Verfahren zum Bestimmen eines momentanen Verschleißzustandes einer hydrostatischen Maschine sehen keine Berücksichtigung dieser Berechnungsfehler verursachenden Leckagen vor.

In vorteilhafter Weise kann durch die vorliegende Erfindung unter Verwendung des Drehmoments und des Volumenstromes und deren relativen Entwicklung abgeschätzt werden, wo im hydraulischen System ein Verschleiß eingetreten ist und/oder stattfindet. Es kann geschlussfolgert werden, dass wenn beispielsweise beide Abnutzungsgrößen (Drehmoment, Volumenstrom) sich verschlechtern, ein Verschleiß in der hydrostatischen Maschine vorliegt. Verschlechtert sich hingegen nur eine dieser beiden Abnutzungsgrößen, ist die Abnutzungsursache in dem jeweiligen Systembereich zu detektieren.

Vorteilhafte Ausführungsformen und Weiterbildungen ergeben sich aus den Unteransprüchen, sowie aus der Beschreibung unter Bezugnahme auf die Figuren.

In einer bevorzugten Ausführungsform der Erfindung umfasst der Schritt des Bestimmens eines ersten Drehmomentes des Antriebes ein Ermitteln eines Produktes aus einer momentanen Stromaufnahme des Antriebes und einem Proportionalfaktor. Der Proportionalfaktor stellt eine charakteristische Größe des Antriebes dar. Beispielsweise kann im Falle einer Ausgestaltung des Antriebes als ein Servomotor über den anliegenden Strom am Servo-Drive das Drehmoment bestimmt werden. Der Servo-Drive stellt einen spezifischen elektronischen Verstärker dar, welcher für den Antrieb von Servomechanismen verwendet wird. Über den Servo-Drive kann der an den drei Phasen anliegende Strom ermittelt werden. In dieser Ausführungsform stellt der Drive einen Sensor für die Bestimmung des anliegenden Stromes dar. Das Ist-Drehmoment $M_{act}$ ergibt sich aus dem gemessenen Strom I (anliegender Strom) und dem Proportionalfaktor $K_t$. Die Erfindung ist nicht auf die zuvor genannte Verwendung eines Servo-Drives begrenzt. Vielmehr ist sich der Fachmann bewusst, dass weitere Steuereinheiten derart ausgebildet sein können, den Strom des Antriebes zu detektieren bzw. zu messen.

In einer alternativen Ausführungsform der Erfindung umfasst der Schritt des Bestimmens eines ersten Drehmomentes des Antriebes ein Messen des ersten Drehmomentes mit einem Drehmomenten-Sensor. Durch die hydrostatische Pumpe der hydrostatischen Maschine wird ein Ist-Volumenstrom im Fluidkanal des hydraulischen Systems erzeugt. Dadurch ist ein momentanes Ist-Drehmoment am hydrostatischen Antrieb der hydrostatischen Pumpe notwendig. Das Ist-Drehmoment zum Berechnen des Verhältnisses kann über die Messung mit einem Drehmomenten-Sensor ermittelt werden. Über einen Drehmomenten-Sensor kann das Drehmoment an dem Antrieb ermittelt werden. Der Drehmomenten-Sensor kann zwischen dem Antrieb und der der Pumpe der hydrostatischen Maschine, beispielsweise an der Welle eingebracht werden.

In einer weiteren Ausführungsform können sowohl der Drehmomenten-Sensor, als auch die Bestimmung des Ist-Drehmomentes durch die Messung des Stromes in den Phasen durch den Drive des Antriebes in einer redundanten Ausgestaltung gleichzeitig verwendet werden. Somit wird ein Ausfallrisiko verringert.

In einer Ausführungsform umfasst das erste Rechenverfahren eine multivariate Regression. Insbesondere besteht das erste Rechenverfahren aus einer multivariaten Regression des gesamten Antriebsvektors. Hierzu werden Paare von Antriebsvektor und Drehmoment als Messdaten herangezogen. Hierfür können verschiedene Messvorschriften angewendet werden, um die entsprechenden Paare zu erhalten. So können beispielsweise für den Antriebsvektor ein D-dimensionales Gitter erstellt werden. Dieses kann n äquidistante Gitterpunkte in jeder Dimension umfassen. Die einzelnen Gitterpunkte können vermessen werden. Alternativ kann der Antriebsvektor zeitliche verändert werden und das Drehmoment kontinuierlich gemessen werden. Um alle Abmessungen des gesamten Antriebsvektors zu erfassen, können Messungen mit allen Werten oder einer vorgegebenen Auswahl an Abtastwerten des kompletten Antriebsvektors der Dimension D erfolgen. Bei bestimmten hydrostatischen Pumpen kann es hinreichend sein, nur eine Teilmenge der Dimensionen und/oder der Werte des Antriebsvektors zu berücksichtigen.

In einer Ausführungsform umfasst das erste Rechenverfahren die Verwendung wenigstens einer Lookup-Tabelle. Aus der wenigstens einen Lookup-Tabelle kann ein Wert für das zweite Drehmoment des Antriebes berechnet werden. Durch die Lookup-Tabelle kann ein Grid an Punkten, insbesondere Datenpunkte abgespeichert werden. Über die Lookup-Tabelle können die Datenpunkte statisch definiert und zur Laufzeit des Programms, zur Vermeidung aufwändiger Berechnungen verwendet werden. In der Lookup-Tabelle werden für bestimmte Konstellationen an Eingabeparametern (z.B. Antriebsvektoren) vorberechnete Ergebnisse definiert und zugehörig gespeichert. Die einzelnen Einträge einer Lookup-Tabelle können über einen Suchbegriff einer Spalte oder über eine Position identifiziert und angesprochen werden. Bei dem Auswerten der Lookup-Tabelle wird zwischen den nächstliegenden Einträgen interpoliert. Jeder Eintrag enthält entsprechend vordefinierte Informationen. Durch die Lookup-Tabelle können komplexe Berechnungen zur Programmlaufzeit durch eine in der Regel schnelle Wertsuche ersetzt werden. Zudem ist unter Verwendung von Lookup-Tabellen kein Vorwissen notwendig. Diese sind instantan einsatzbereit, sobald Einträge vorhanden sind.

In einer weiteren Ausführungsform umfasst das erste Rechenverfahren ein physikalisches Modell einer hydrostatischen Maschine. Erfindungsgemäß wird ein Wert für das zweite Drehmoment des Antriebes aus dem physikalischen Modell abgeleitet. Ein physikalisches Modell stellt im Sinne der vorliegenden Erfindung eine fortlaufende Simulation der zugrundeliegenden Physik dar. Es wird ein physikalisches Modell von einer gesunden hydrostatischen Maschine abgeleitet. Unter einer gesunden hydrostatischen Maschine ist im Sinne der vorliegenden Erfindung eine hydrostatische Maschine zu verstehen, welche noch nicht zum Erzeugen eines hydraulischen Drucks verwendet wurde und somit keinen Verschleißeinflüssen unterlag. Die Physik des physikalischen Modells wird dabei durch Gleichungen, insbesondere durch Differentialgleichungen repräsentiert. Die entsprechenden Gleichungen müssen für jedes Zeitintervall berechnet werden. Für das Erstellen des physikalischen Modells wird das Ist-Drehmoment aufgenommen und unter Verwendung weiterer Sensoren werden bestimmte Parameter an einer gesunden hydrostatischen Maschine gemessen.

In einer weiteren Ausführungsform ist das erste Rechenverfahren als ein Modul für maschinelles Lernen ausgebildet. Das Modul kann beispielsweise ein trainiertes künstliches Netzwerk - Neuronales Netzwerk (Artificial Neural Network (ANN)) umfassen. Neuronale Netze können für die Klassifikation, Cluster-Erkennung oder Regression eingesetzt werden. Im Allgemeinen bestehen neuronale Netzwerke aus einer Vielzahl an Parametern, die in einer zuvor definierten Weise miteinander interferieren, um ein gewünschtes Ergebnis zu erzielen. Der optimale Satz an Parametern wird in einer Anlernphase für das neuronale Netzwerk ermittelt. Dabei werden die einzelnen Parameter so lange variiert, beispielsweise mittels einem Gradient Descent Verfahren, bis das neuronale Netzwerk das gewünschte Ergebnis(se) erzielt. Die Verwendung eines neuronalen Netzwerkes hat den Vorteil, dass die Struktur der einzelnen Messdaten und somit eine Abbildung der Wirklichkeit angelernt werden kann. Zudem benötigen die Messdaten keine Ordnung und/oder Struktur. Durch das neuronale Netzwerk ist keine Beschränkung der Dimensionalität gegeben. Die notwendige Rechenleistung und der Speicherbedarf für die Berechnung des neuronalen Netzwerkes ist über die Anzahl der verwendeten Parameter steuerbar. Zudem kann das neuronale Netzwerk während der Verwendung durch die ausgewerteten Daten neu- und/oder weiter trainiert werden, wodurch der Wert für das zweite Drehmoment des Antriebes genauer und präziser ermittelt wird.

In einer bevorzugten Ausführungsform umfasst das neuronale Netzwerk eine Feed-Forward-Architektur. Diese bietet eine vereinfachte Handhabung und geringen Recheneinsatz für das Auswerten. Somit kann das neuronale Netzwerk auf den Mikrocontrollern, beispielsweise den festintegrierten Recheneinheiten der Maschinen implementiert werden.

In einer Ausführungseinheit wird das erste und/oder das zweite Rechenverfahren auf einer Steuereinheit der hydrostatischen Maschine, insbesondere lokal gespeichert und ausgeführt. Die Steuereinheit kann eine Speichereinheit, ausgebildet als ein nichtflüchtiger Speicher, z.B. ein Flash-Laufwerk oder eine Magnetplatte, sowie eine Prozessoreinheit zum Ausführen des Modells oder des trainierten künstlichen Netzwerkes umfassen. Dies ist besonders vorteilhaft bei eigenständigen hydrostatischen Maschinen ohne oder mit eingeschränkter Kommunikationsverbindung zu anderen und/oder zentralen Steuereinheiten.

In einer alternativen oder ergänzenden Ausführungsform wird das Modell oder das trainierte künstliches Netzwerk in einer globalen Umgebung auf einer örtlich getrennten Steuereinheit gespeichert und ausgeführt. Somit kann das Modell oder das trainierte künstliches Netzwerk - allein oder zusätzlich - zentral gespeichert werden, z.B. auf einem zentralen Server oder in einem Computer-Cloud-System. Dies ist dann von Vorteil, wenn die Steuereinheit der hydrostatischen Maschine nicht die Rechenleistung und/oder den Speicherbereich zur Verfügung hat, um entsprechende Berechnungen durchzuführen. Diesbezüglich können die Berechnungen auf den zentralen Server oder in die Cloud über entsprechende Kommunikationsverbindungen ausgelagert werden und nur das Ergebnis wird empfangen und ausgewertet bzw. angewendet.

Zudem besteht die Möglichkeit, die Abtastpunkte der Messungen - allein oder zusätzlich - zentral zu speichern. Dies kann auf einem zentralen Server vor Ort oder in Serververbund in der Cloud erfolgen. Dies ist vorteilhaft, wenn aus dem aktuellen Verschleißzustand der hydrostatische Maschine Warnungen, Auswertungen jeglicher Art und/oder Wartungsstrategien abgeleitet werden sollen. Ferner könnte diese die Grundlage sein, um die gesamte Standzeit der hydrostatischen Pumpe zu erfassen.

In einer weiteren Ausführungsform gemäß der Erfindung umfasst das erste Rechenverfahren eine Polynomfunktion, beispielsweise eine lineare Funktion, der Werte des Antriebsvektors. Unter Verwendung der Polynomfunktion können Approximatoren für das Drehmoment gewonnen werden.

Unter Verwendung dieses Verfahrens ist es notwendig ein Ist-Drehmoment des Antriebes der hydrostatischen Maschine zu ermitteln. Hierbei ist bekannt, dass bei einer Abnutzung der hydrostatischen Pumpe ein größeres Drehmoment bereitgestellt werden muss, als im Vergleich unter Verwendung einer neuwertigen hydrostatischen Pumpe. Hierbei ist mit Verfahren nach dem Stand der Technik nicht möglich, von dem Ist-Drehmoment auf den aktuellen Verschleißzustand der hydrostatischen Pumpe zu schließen. Der Grund ist, dass das tatsächliche Ist-Drehmomentwelches ermittelbar ist - von vielen Systemvariablen, z.B. von der Viskosität und/oder der Temperatur und/oder dem Druck der Hydraulikflüssigkeit abhängt. Außerdem hängen zumindest einige dieser Systemvariablen von anderen Systemvariablen ab, manchmal in einer komplexen Weise. Ein Beispiel könnte die Abhängigkeit der Viskosität der Hydraulikflüssigkeit von deren Temperatur sein, wobei diese Abhängigkeit wiederrum von der Art der verwendeten Flüssigkeit abhängig ist und für jede Art von hydrostatischer Pumpe unterschiedlich sein kann, beispielsweise je nach maximaler Leistung einer hydrostatischen Pumpe. Als ein weiteres Beispiel könnte es auch eine dynamische Abhängigkeit zwischen Systemvariablen geben, z.B. lässt sich die Abhängigkeit zwischen der Drehzahl der hydrostatischen Pumpe und dem Druck der Flüssigkeit in einer Übergangssituation am besten durch eine Differentialgleichung beschreiben.

Die entsprechenden Systemvariablen, die das Drehmoment einer hydrostatischen Pumpe beeinflussen, können durch einen Antriebsvektor der Dimension D dargestellt werden. Jede Dimension des Antriebsvektors hat einen relevanten Bereich, d.h. einen minimalen und einen maximalen Wert, die entweder die Bereiche physikalisch zulässiger Werte sind - möglicherweise begrenzt durch technische Beschränkungen - oder anderweitig begrenzt sind. Zum Beispiel könnte der Bereich des Drucks **p** eines Fluid in einem bestimmten Pumpentyp wie folgt aussehen: Bereich (p) = ($p_{min}$, $p_{max}$) = (1 mPa, 30 mPa (10 bar, 300bar)).

Basierend auf der Kenntnis des Verhaltens einer bestimmten hydrostatischen Pumpe - oder einer Klasse von Pumpen - kann abhängig von den Werten des Antriebsvektors ein Modell der verwendeten hydrostatischen Pumpe erstellt werden. Das erstellte Modell stellt somit die Grundlage für das erste Rechenverfahren dar. Im Prinzip lässt sich das Drehmoment der Pumpe durch eine Funktion berechnen, die alle relevanten Werte von jeder Abmessung des Antriebsvektors berücksichtigt.

In einer einfachen beispielhaften Umsetzung des ersten Rechenverfahrens kann - zum Zwecke eines vereinfachten Beispiels - nur ein einziger Antriebsvektor betrachtet werden, der aus einem Fördervolumen **V** [ccm] und einem Druck **p** besteht. Ein solches erstes Rechenverfahren könnte beispielsweise ein folgendes Drehmoment $M_{comp}$ (berechnetes Drehmoment) berechnen:

$$M_{comp}(V, p) = M_{comp}(19, 20) = 10,75 \text{ Nm}$$

für einen vorbestimmten Antriebsvektor, der ein Fördervolumen von **V** = 19 ccm und einen Druck von **p** = 2 mPa (20 bar) aufweist. Ein anderer beispielhafter vorbestimmter Antriebsvektor kann ein Fördervolumen von **V** = 19 ccm und einen Druck von **p** = 28 mPa (280 bar) aufweisen, was einen berechneten Wert für das Drehmoment von $M_{comp}$ (19, 280) = 96,75 Nm ergibt.

Erfindungsgemäß wird der Verschleißzustand der hydrostatischen Maschine mittels eines zweiten Rechenverfahrens bestimmt, dass das bestimmte erste Drehmoment (Ist-Drehmoment) des Antriebes der hydrostatischen Maschine grundsätzlich mit dem unter Verwendung des ersten Rechenverfahrens ermittelten zweiten Drehmomentes des Antriebes in Beziehung setzt. Dieses Verhältnis bzw. der Quotient aus dem ermittelten Drehmoment (berechnete Drehmoment) zu dem bestimmten Ist-Drehmoment gibt dabei eine quantitative Größe des Verschleißzustandes (Wert für den Verschleiß) der hydrostatischen Maschine zum Messpunktzeitpunkt wieder.

In einer Ausführungsform gemäß der Erfindung ermittelt das zweite Rechenverfahren ein Verhältnis, und zwar einen Quotienten aus dem ersten bestimmten Drehmoment an einem vorgegebenen Antriebsvektor zu einem zweiten ermittelten Drehmoment an dem vorgegebenen Antriebsvektor.

UnterVerwendung der oben ausgeführten Werte des Antriebsvektors, kann als Beispiel das tatsächlich gemessene Drehmoment $M_{act}$ (gemessenes Drehmoment) für einen vorbestimmten Antriebsvektor, der ein Fördervolumen von $V$ = 19 ccm und einen Druck von $p$ = 28 mPa (280 bar) aufweist, $M_{act}$ (19, 280) = 101,31 Nm betragen. Dies würde zum folgenden quantitativen Wert für den momentanen Verschleißzustand führen:

$$w = M_{comp} (19, 280) / M_{act} (19, 280) = 96,75 \text{ Nm} / 101,31 \text{ NM} = 95,50\%.$$

In einer Ausführungsform gemäß der Erfindung ermittelt das zweite Rechenverfahren ein Verhältnis, und zwar einen Mittelwert, aus einem Satz von Quotienten, wobei jeder der Quotienten der Quotient aus dem ersten bestimmten Drehmoment an einem vorgegebenen Antriebsvektor zu einem zweiten ermittelten Drehmoment an dem vorgegebenen Antriebsvektor ist.

Für verschiedene Arbeitspunkte, d.h. für verschiedene Antriebsvektoren, können nun die momentanen Verschleißwerte in einer Historie festgehalten werden. Daraus kann ein Durchschnittswert für den Verschleißzustand in einem vorgegebenen Zeitfenster bestimmt werden. Ein zweiter beispielhafter gemessener Wert für das Drehmoment ist $M_{act}$ (19, 20) = 11,59 Nm, woraus sich ein zweiter momentaner Verschleißzustand w berechnen lässt:

$$w = M_{comp} (19, 20) / M_{act} (19, 20) = 10,75 \text{ Nm} / 11,59 \text{ Nm} = 92,75\%.$$

Demgemäß würde der momentane Durchschnittsverschleiß w = 94,13% betragen.

Als eine Alternative kann vorgesehen sein, dass die Werte für den Verschleißzustand **w** gewichtet werden. Beispielsweise könnten die Werte von **w** bei niedrigeren Druckwerten geringer und die Werte bei höheren Druckwerten stärker gewichtet werden. Ein Grund für diese stärkere Hervorhebung des Verschleißes bei höheren Druckwerten kann darin bestehen, dass das hydraulische System häufiger mit höheren Druckwerten betrieben wird. Als ein quantitatives Beispiel kann eine Gewichtung von 20% für den Verschleiß bei 2 mPa (20 bar) und 80% den Verschleiß bei 28 mPa (280 bar) verwendet werden. Dann wäre unter Verwendung der gleichen Werte wie oben ausgeführt, der gewichtete momentane Durchschnittsverschleiß w = 94,95%.

In einer Ausführungsform der Erfindung umfasst der Antriebsvektor eine Drehzahl des Antriebs der hydrostatischen Maschine. Ein Vorteil der Berücksichtigung der Drehzahl besteht darin, dass für einen Bediener sofort klar ist, dass - bei Pumpen, die mit variabler Drehzahl angetrieben werden - die Leistung des Hydrauliksystems stark mit der momentanen Drehzahl des Antriebes korreliert. Betreiber von Hydrauliksystemen sind es gewohnt, mit Tabellen auf Basis der Drehzahl des Antriebes zu arbeiten, um die Leistung des Antriebes zu beurteilen. Überdies können die entsprechenden Drehzahlen in einfacher Weise gemessen werden. Zudem wirkt sich die Drehzahl durch die geschwindigkeitsabhängige Reibung auf das Drehmoment aus, womit die Drehzahl ein guter Indikator für einen Veränderung des Verschleißzustandes darstellt.

In anderen Ausführungsformen des Verfahrens gemäß der vorliegenden Erfindung können weitere Werte von dem Antriebsfaktor umfasst sein. Beispiele können die Hydraulikflüssigkeitssorte (Typ des Fluid), oder das momentane Fördervolumen des verwendeten Fluid der hydrostatischen Pumpe. Kenntnis über das momentane Fördervolumen und dessen Verwendung kann dahingehend vorteilhaft sein, da das zu bestimmende Drehmoment stark von der geförderten Fluidmenge pro Umdrehung der hydrostatischen Maschine abhängt.

In einer weiteren erfindungsgemäßen Ausführungsform umfasst der Antriebsvektor einen ersten Druck des Fluid. Der erste Druck des Fluid beschreibt den Druck am Arbeitsausgang. Zudem ist in der Regel der Leckage Strom einer Pumpe bei höheren Druckwerten höher. Daher ist es vorteilhaft, einen ersten Druck des Fluid in die Bestimmung des Drehmomentes mit einzubeziehen.

In einer erfindungsgemäßen Ausführungsform umfasst der Antriebsvektor einen zweiten Druck des Fluid, welcher den Druck des in die Pumpe eingespeisten Fluid beschreibt. Somit kann der zweite Druck mit dem Druck an der zweiten Drucköffnung der Pumpe in Beziehung stehen. Beispielsweise kann der erste Druck mit einem ersten Druckanschluss der Pumpe in Beziehung stehen und einen hohen Arbeitsdruck für die Bewegung des Pumpenzylinders erreichen. Der zweite Druck wirkt sich diesbezüglich auf den zweiten Anschluss der Pumpe aus und erzeugt einen niedrigen Vorspannungsdruck. Die sich ergebende Differenz zwischen dem ersten Druck zu dem zweiten Druck beeinflusst den Leckage Strom der Pumpe. Das Drehmoment hängt stark von dieser Differenz ab, welche dem so genannten Lastdruck entspricht. Es kann unter Umständen auch zu einer druckabhängigen Deformation der Pumpe kommen, was die Reibung beeinflusst und sich damit auf das Drehmoment niederschlägt.

In einer erfindungsgemäßen Ausführungsform umfasst der Antriebsvektor eine Viskosität des Fluid. Diese wirkt sich auf die Schmierung der sich relativ zueinander bewegenden Bauteile aus und auf das sich im Pumpengehäuse bewegende Fluid, was ein zusätzliches Drehmoment verursacht. Oft weist die Viskosität für eine Sorte einer Hydraulikflüssigkeit einen typischen Wert auf. Dieser muss in Fällen berücksichtigt werden, in denen das Fluid gegen eine andere Sorte an Hydraulikflüssigkeit ausgetauscht wird. Ferner kann die Viskosität des Fluid von dessen Temperatur abhängen. Verschiedene Arten von Fluiden sind in der Regel in unterschiedlicher Form von deren Temperaturen abhängig.

In einer erfindungsgemäßen Ausführungsform enthält der Antriebsvektor eine Temperatur des Fluid. Die Temperatur des Fluid beeinflusst insbesondere die Viskosität des Fluid, je nach dessen Sorte und/oder Klasse.

Der Antriebsvektor kann sowohl einen zuvor genannten Parameter umfassen, als auch in verschiedenen Ausführungsformen eine Vielzahl der zuvor genannten Parameter berücksichtigen. Somit wird die Berechnung der Verschleißzustandes genauer, da tatsächliche Bedingung, unter denen die hydrostatische Maschine eingesetzt ist, berücksichtigt werden.

In einer Ausführungsform ist die hydrostatische Maschine als eine hydrostatische Pumpe oder als ein hydrostatischer Motor oder als eine hydrostatische 4-Quadranten Maschine ausgebildet.

In einer Ausführungsform umfasst die hydrostatische Pumpe eine Radialkolbenpumpe oder eine Radialkolbenpumpe mit variabler Verstellung.

In einer Ausführungsform wird der bestimmte momentane Verschleißzustand für eine Verschleißprognose der hydrostatischen Maschine verwendet. In vorteilhafter Weise kann nach dem Erzeugen einer Verschleißhistorie eine Vorhersage für zukünftige Werte des Verschleißzustandes bestimmt werden. Dies ist insbesondere dann sinnvoll, wenn sowohl die gesamte Standzeit der hydrostatischen Maschine, als auch Daten der Verschleißzustände einer Klasse von hydrostatischen Maschinen und deren hydrostatischen Pumpen zur Verfügung stehen. Typischerweise umfasst dies nicht nur Werte von Momentaufnahmen, sondern kann dies vielmehr auch eine Verschleißhistorie einer oder mehrerer hydrostatischer Maschinen umfassen. Basierend auf diesen Daten lässt sich der Verschleißzustand bzw. der Verschleiß der hydrostatischen Maschine prognostizieren. Dafür können verschiedene Methoden verwendet werden, wie beispielsweise Markov-Ketten, Kalman-Filter und/oder Machine Learning Ansätze.

In einer Ausführungsform kann der momentane Verschleißzustand als ein Eingangsparameter für eine Simulation eines Zustandes der hydrostatischen Maschine verwendet werden. Über die Simulation kann in vorteilhafter Weise der Verschleiß berechnet und/oder veranschaulicht werden, um entsprechende Wartungs- und Instandhaltungsmaßnahmen zu planen und/oder durchzuführen. Insbesondere kann die Simulation für Predictive-Maintenance Ansätze verwendet werden.

Ein weiterer Aspekt der vorliegenden Erfindung umfasst eine elektrohydrostatische Pumpenvorrichtung. Die Elektrohydrostatische Pumpenvorrichtung umfasst eine hydrostatische Pumpe, einen Antrieb mit variabler Drehzahl und eine elektronische Steuereinheit. Die elektronische Steuerung ist in der Lage ist, ein Verfahren nach einem der Verfahrensansprüche der vorliegenden Erfindung auszuführen. Die Steuereinheit kann einen oder mehrere Prozessoren aufweisen, welche ausgebildet sind, das Verfahren auszuführen. Ferner kann die Steuereinheit Speicher umfassen, insbesondere flüchtige und/oder nichtflüchtige Speicher, um das Verfahren und/oder Abtastwerte für die Antriebsvektoren zu speichern. In einer weiteren Ausgestaltung kann die Steuereinheit Mittel zur Kommunikation, insbesondere zur Datenkommunikation aufweisen. Die Mittel umfassen drahtgebundene, z.B. LAN, serielle/parallele Schnittstellen usw. und/oder drahtlose, z.B. WLAN, Bluetooth Schnittstellen usw.

In einer Ausgestaltung kann das Verfahren gemäß der Erfindung auf einer dezentralen Zielplattform mit einer externen Elektronik/Steuerung gespeichert und ausgeführt werden. Die externe Elektronik/Steuerung kann lokal neben der entsprechend anzutreibenden Maschine installiert sein oder zentral an einer vorgesehenen Position in der Fertigungseinrichtung installiert sein. In einer weiteren Ausgestaltung kann das Verfahren in einem Server-Verbund, beispielsweise in einer Cloud gespeichert und ausgeführt werden.

Die vorstehend beschriebenen, erfindungsgemäßen Ausführungsformen des Verfahrens gemäß der Erfindung können auch als ein Computerprogramm ausgebildet sein, wobei ein Computer zur Durchführung des oben beschriebenen, erfindungsgemäßen Verfahrens veranlasst wird, wenn das Computerprogramm auf einem Computer bzw. auf einem Prozessor des Computers, vorzugsweise der Steuereinheit ausgeführt wird. Das Computerprogramm kann als Signal per Download bereitgestellt oder in einer Speichereinheit des Computers mit darin enthaltenem computerlesbarem Programmcode gespeichert werden, um den Computer zur Ausführung von Anweisungen gemäß dem oben genannten Verfahren zu veranlassen. Dabei kann das Computerprogramm auch auf einem maschinenlesbaren Speichermedium gespeichert sein. Eine alternative Aufgabenlösung sieht ein Speichermedium vor, das zur Speicherung des vorstehend beschriebenen, Verfahrens bestimmt ist und von einem Computer oder Prozessor lesbar ist.

Die vorliegende Erfindung wird nachfolgend anhand der in den schematischen Figuren der Zeichnungen angegebenen Ausführungs-beispiele näher erläutert. Es zeigen dabei:

Fig. 1 eine schematische Darstellung eines vereinfachten hydraulischen Systems;

Fig. 2 ein Ablaufdiagramm gemäß einer Ausführungsform des erfindungsgemäßen Verfahrens; und

Fig. 3 ein Beispiel für ein die Variation des Leistungszustandes.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist-jeweils mit denselben Bezugszeichen zu versehen.

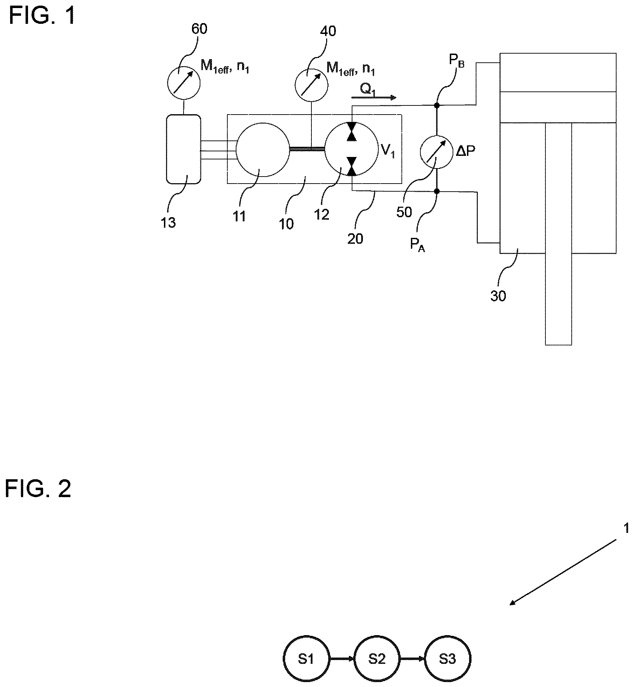

**Fig.** 1 zeigt eine schematische Darstellung eines vereinfachten hydraulischen Systems. Das hydraulische System in der dargestellten Form umfasst eine hydrostatische Maschine 10, einen Zylinder 30, bevorzugt einen hydraulischen Zylinder. Der hydraulische Zylinder 30 ist mit der hydrostatischen Maschine 10 über Fluidkanäle 20 verbunden (weitere notwendige Komponenten des hydraulischen Systems, die für die vorliegende Erfindung von geringer Relevanz sind, werden nicht dargestellt). Die hydrostatische Maschine 10 umfasst in der vereinfachten Form eine hydrostatische Pumpe 12, welche von einem Antrieb 11, vorzugsweise einem Elektromotor mit variabler Drehzahl n angetrieben wird. Die Verbindung zwischen dem Antrieb 11 und der hydrostatischen Pumpe 12 kann beispielsweise über eine Welle, Getriebe usw. umgesetzt sein. Im Betrieb der hydrostatischen Maschine 10 weist die Welle eine spezifische Drehzahl n auf. Die hydrostatische Pumpe 12 ist über die Fluidkanäle 20 (Vor- und Rücklauf) mit einem hydraulischen Zylinder 30, beispielsweise einem Differentialzylinder verbunden. Differentialzylinder sind im Stand der Technik bekannt und weisen einen Kolben, eine Kolbenstange und zwei Zylinderkammern auf. Die hydrostatische Pumpe 12 pumpt die Hydraulikflüssigkeit über die Fluidkanäle 20 zum Zylinder 30. Durch das Pumpen der Hydraulikflüssigkeit in die jeweilige Druckkammer des Hydraulikzylinders 30 werden der Kolben und die Kolbenstange in die jeweilige Richtung (Einfahren/Ausfahren des Zylinders) bewegt. Zudem ist in **Fig.** 1 der Drive 13 als Steuereinheit für den Antrieb 11 der hydrostatischen Maschine 10 dargestellt. Über den Drive 13 werden die Ströme zum Antreiben des Antriebes 11 bereitgestellt und gesteuert. Ferner kann über den Drive 13 die Stromaufnahme, beispielsweise die Nennstromaufnahme des Antriebes 11 gemessen werden. Hierfür können interne Messinstrumente- oder Verfahren verwendet werden. Aus der gemessenen momentanen Stromaufnahme und einem Proportionalfaktor, kann ein erstes Drehmoment $M_{1eff}$ des Antriebes 11 ermittelt werden. Ferner kann über den Drive 13 die Drehzahl $n_1$ des Antriebes 11 bestimmt werden. Die Drehzahl $n_1$ kann in dem Antriebsvektor enthalten sein. In einer alternativen oder kombinierten Ausführungsform kann die hydrostatische Maschine 10 einen Drehmomenten-Sensor 40 und einen Sensor 40 zur Erfassung der Drehzahl $n_1$ aufweisen. Der Drehmomenten-Sensor 40 und der Drehzahl-Sensor 40 zur Erfassung der Drehzahl $n_1$ können derart in der hydrostatischen Maschine 10 eingebracht sein, so dass diese das erste Drehmoment $M_{1,eff}$ des Antriebes 11, als auch die Drehzahl $n_1$ bestimmen. Unter Verwendung eines ersten Rechenverfahrens kann ein zweites Drehmoment des Antriebes 11 bei einem vorgegebenen Antriebsvektor ermittelt werden. Das erste Rechenverfahren kann die Verwendung eine Lookup-Tabelle und/oder eines physikalischen Modells einer hydrostatische Maschine 10 und/oder als ein Modul für maschinelles Lernen umfassen. Ein momentaner Verschleißzustand w der hydrostatischen Maschine 10 kann unter Verwendung eines zweiten Rechenverfahrens bestimmt werden. Hierzu werden in dem zweiten Rechenverfahren das erste bestimmte Drehmoment $M_{1,eff}$ und das zweite ermittelte Drehmoment folgendermaßen zu einander in Beziehung gesetzt: $M_{1,eff} = f(V_1, n_1, \Delta P, v)$ wobei $M_{1,eff}$ dem bestimmten ersten Drehmomentes des Antriebes 11 bei einem entsprechenden Antriebsvektor entspricht und der Antriebsvektor ein Fördervolumen $V_1$, eine Drehzahl $n_1$, eine Differenzdruck $\Delta P$ und/oder einen Wert für die Viskosität v des Fluid umfasst. Ausführungsformen gemäß der Erfindung können einen oder eine Vielzahl an Parameter für einen Antriebsvektor berücksichtigen. Der Differenzdruck $\Delta P$ kann über eine Drucksensor 50 erfasst werden, welcher die Druckdifferenz aus den Drücken $P_A$, $P_B$ ermittelt. Der Verschleißzustand w bzw. der Gesundheitsindex HI der hydrostatischen Maschine 10 ergibt sich aus $w = M_{1,100\%}/M_{1,eff}$, wobei $M_{1,100\%}$ das mit dem ersten Rechenverfahren ermittelte zweite Drehmoment entspricht.

In **Fig.** 2 ist ein Ablaufdiagramm gemäß einer bevorzugten Ausführungsform des erfindungsgemäßen Verfahrens dargestellt. Das Verfahren 1 umfasst bei der dargestellten Ausführungsform mehrere Schritte. In einem ersten Schritt S1 wird ein erstes Drehmoment des Antriebes 11 bei einem vorgegebenen Antriebsvektor bestimmt. In einem zweiten Schritt S2 wird ein zweites Drehmoment des Antriebes 11 bei dem vorgegebenen Antriebsvektors unter Verwendung eines ersten Rechenverfahrens ermittelt. In einem dritten Schritt S3 wird der momentane Verschleißzustand der hydrostatischen Maschine 10 unter Verwendung eines zweiten Rechenverfahrens bestimmt. Es werden das erste bestimmte Drehmoment und das zweite ermittelte Drehmoment in Beziehung zueinander zugesetzt.

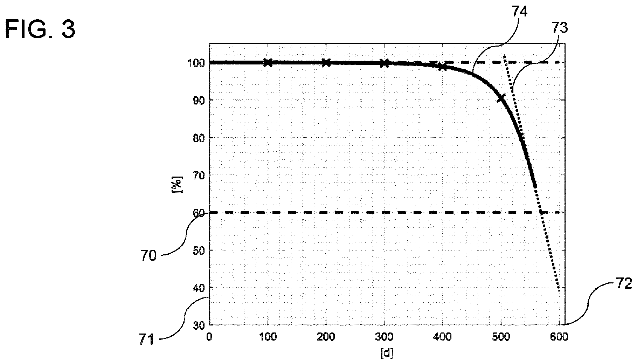

**Fig.** 3 zeigt ein Beispiel der Kurve des Verschleißzustandes w in % bzw. des Gesundheitsindex HI in % einer hydrostatischen Maschine 10, wie er sich über eine bestimmte Nutzungsdauer d ergeben könnte. Die Kurve 74 stellt die Variation des Verschleißzustandes w in % (y-Achse 71) bzw. des Gesundheitsindex HI in % über eine Nutzungsdauer d (x-Achse 72) dar. Über die Nutzungsdauer d werden in bestimmten Intervallen (100, 200, usw.) für einen Antriebsvektor Werte für den Differenzdruck $\Delta P$, das Fördervolumen $V_1$, die Drehzahl $n_1$, und den Wert für die Viskosität v des Fluid erfasst. In der Tabelle 1 sind beispielhafte Werte für den Differenzdruck, das Fördervolumen, die Drehzahl und für die Viskosität aufgeführt. Für diesen Antriebsvektor wird ein erstes Drehmoment $M_{1,eff}$ unter Messung des Stroms des Antriebes 11 und einem Proportionalfaktor und/oder durch Messung mittels eines Drehmomenten-Sensors bestimmt. Durch ein erstes Rechenverfahren wird ein zweites Drehmoment $M_{1,100\%}$ für den entsprechenden Antriebsvektor ermittelt. Das erste Drehmoment und das zweite Drehmoment werden unter Verwendung eines zweiten Rechenverfahrens zu einander in Beziehung gesetzt und resultieren in den Verschleißzustand w bzw. den Gesundheitsindex HI. Aus der **Fig. 3** kann entnommen werden, dass sich der Gesundheitsindex HI in % über die Nutzungsdauer verschlechtert, was durch die fallende Kurve 74 dargestellt ist. Weiterhin ist in der **Fig. 3** ein Grenzlinie 70 dargestellt. Diese Grenzlinie 70 stellt einen Bereich dar, in dem der Verschleißzustand w, dargestellt durch die Kurve 74 einen Wert erreicht, in dem Wartungs- bzw. Instandhaltungsmaßnahmen ergriffen werden sollten, um der Verschleiß in der hydrostatischen Maschine 10 zu beheben, bzw. negative Folgen für ein hydraulisches System auf ein Minimum zu begrenzen. Zudem wird durch die Kurve 73 dargestellt, wie die Kurve 74 für die Anwendung der Predictive Maintenance extrapoliert werden kann. Somit kann eine Vorhersage über den zeitlichen Verlauf des Verschleißzustandes getroffen werden. Diese Extrapolation kann durch lineare Regression, wie in der **Fig. 3** dargestellt, oder alternativ mit Hilfe von Markov-Ketten, Kalman-Filter und/oder Machine Learning Algorithmen erzielt werden. Hierzu ist eine Historie über den Verschleißzustand notwendig. In vorteilhafter Weise kann ein Bediener der Anlage unter Verwendung der Informationen über den Verschleißzustand notwendige Wartungen der Maschine planen, vorbereiten bzw. wenn notwendig durchführen. In der Fig. 3 stellen die mit "X" markierten Punkte die entsprechenden Messpunkte des Verschleißzustandes dar und die Kurve 74 wird über die Simulation/Extrapolation mit Hilfe der o.g. Verfahren (Markov-Ketten, usw.) ermittelt.

Aus der **Tabelle 1** kann entnommen werden, dass das bestimmte erste Drehmoment $M_{1,eff}$ einen höheren Wert aufweist, als das zweite ermittelte Drehmoment $M_{1,100\%}$. Dies kann auf Reibung innerhalb der hydrostatischen Maschine 10 bzw. der hydrostatischen Pumpe 12 zurückgeführt werden. Im Ergebnis ergibt sich ein verschlechterter Gesundheitsindex HI. Über die Nutzungsdauer d nimmt der Gesundheitsindex HI stetig ab. Dieser Index kann für eine Verschleißprognose und/oder eine Simulation des Verschleißzustandes verwendet werden und in Predictive-Maintenance resultieren.

Tabelle 1

| Zeit [d] | $\Delta p$ [bar] | $V_1$ [cmm] | $n_1$ [rpm] | v [cSt] | $M_{1,100\%}$ [Nm] | $M_{1,eff}$ [Nm] | HI [%] |
|----------|----------|---------|---------|---------|------------|----------|--------|
| 100 | 100 | 19 | 1250 | 98 | 35.72 | 35.73 | 99.97 |
| 200 | 150 | 14.25 | 500 | 83 | 39.98 | 40.00 | 99.94 |
| 300 | 10 | 19 | 2500 | 95 | 3.94 | 3.95 | 99.81 |
| 400 | 100 | 19 | 1300 | 72 | 35.62 | 36.02 | 98.90 |
| 500 | 150 | 14.25 | 575 | 82 | 40.02 | 42.26 | 90.47 |

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind.

Der Schutzbereich der vorliegenden Erfindung ist durch die Ansprüche gegeben und wird durch die in der Beschreibung erläuterten oder den Figuren gezeigten Merkmale nicht beschränkt.

Bezugszeichenliste

| 1  | Verfahren |
|----|-----------|
| 10 | hydrostatische Maschine |
| 11 | Antrieb |
| 12 | hydrostatische Pumpe |
| 13 | Drive |
| 20 | Fluidtransportkanal |
| 30 | hydraulischer Zylinder |
| 40 | Drehmomenten-Sensor |
| 50 | Drucksensor |
| 60 | Stromdetektor |
| 70 | Verschleißgrenze |

| 71 | y-Achse (Gesundheitsindex) |
| 72 | x-Achse (Laufzeit) |
| 73 | PM |
| 74 | Verschleißzustand (Gesundheitsindex) |
| S1-S3 | Verfahrensschritte |
| $P_A$, $P_B$ | Druck |
| $Q_1$ | Volumenstrom |
| $V_1$ | Fördervolumen |
| $M_{1,eff}$ | Ist-Drehmoment |
| n | Drehzahl 19 |

**Patentansprüche**

1. Verfahren (1) zum Bestimmen eines momentanen Verschleißzustandes einer hydrostatischen Maschine (10) während des Betriebes der hydrostatischen Maschine (10), mit einem Antrieb (11) mit variabler Drehzahl und einer hydrostatischen Pumpe (12), wobei der Antrieb (11) ausgebildet ist, die hydrostatische Pumpe (12) zum Erzeugen eines Volumenstroms eines Fluids anzutreiben, und wobei die hydrostatische Maschine (10) mit einem Fluidtransportkanal (20) eines hydraulischen Antriebssystems verbunden ist, in dem das Fluid von der hydrostatischen Maschine (10) angetrieben zum hydraulischen Antriebssystem transportiert wird, **gekennzeichnet durch** die folgenden Schritte:

   Bestimmen (S1) eines ersten Drehmomentes des Antriebes (11) bei einem vorgegebenen Antriebsvektor;
   Ermitteln (S2) eines zweiten Drehmomentes des Antriebes (11) bei dem vorgegebenen Antriebsvektor unter Verwendung eines ersten Rechenverfahrens, wobei das zweite Drehmoment mittels eines physikalischen Modells für eine hydrostatische Maschine, die keinen Verschleißeinflüssen unterlag, ermittelt wird; und
   Bestimmen (S3) des momentanen Verschleißzustandes der hydrostatischen Maschine (10) unter Verwendung eines zweiten Rechenverfahrens, um das erste bestimmte Drehmoment und das zweite ermittelte Drehmoment in Beziehung zueinander zusetzten,
   wobei zueinander in Beziehung setzen das Ermitteln des Verhältnisses zwischen dem ersten bestimmten Drehmoment des Antriebs und des zweiten ermittelten Drehmoments istund wobei vorgegebene Antriebsvektoren eine bestimmte Konstellation von Parametern darstellen, gespeichert in einer Lookup-Tabelle, denen das bestimmte Drehmoment eines Antriebs zugeordnet ist.

2. Verfahren nach Anspruch 1, wobei der Schritt (S1) des Bestimmens eines ersten Drehmomentes des Antriebes (11) ein Ermitteln eines Produktes aus einer Stromaufnahme des Antriebes (11) und einen Proportionalfaktor umfasst.

3. Verfahren nach Anspruch 1, wobei der Schritt (S1) des Bestimmens eines ersten Drehmomentes des Antriebes (11) ein Messen des ersten Drehmomentes mit einem Drehmomenten-Sensor (40) umfasst.

4. Verfahren nach einem der vorherigen Ansprüche, wobei das erste Rechenverfahren die Verwendung wenigstens der Lookup-Tabelle umfasst und ein Wert für das zweite Drehmoment des Antriebes (11) aus der Lookup-Tabelle berechnet wird.

5. Verfahren nach einem der vorherigen Ansprüche, wobei das erste Rechenverfahren das physikalische Modell der hydrostatischen Maschine (10) umfasst und ein Wert für das zweite Drehmoment des Antriebes (11) aus dem physikalischen Modell abgeleitet wird.

6. Verfahren nach einem der Ansprüche 4 bis 5, wobei das erste und/oder das zweite Rechenverfahren als Computerprogramm mit Programmcode lokal auf einer Steuereinheit der hydrostatischen Maschine (10) gespeichert und ausgeführt wird.

7. Verfahren nach einem der vorherigen Ansprüche, wobei das erste Rechenverfahren eine multivariate Regression zur Auswertung eines D-dimensionalen Gitters unter Verwendung von Paaren von Antriebsvektoren und Drehmoment als Messdaten umfasst.

8. Verfahren nach einem der vorherigen Ansprüche, wobei das zweite Rechenverfahren ein Verhältnis ermittelt, und zwar einen Quotienten aus dem ersten bestimmten Drehmoment an einem vorgegebenen Antriebsvektor zu dem zweiten ermittelten Drehmoment an dem vorgegebenen Antriebsvektor.

9. Verfahren nach einem der vorherigen Ansprüche, wobei das zweite Rechenverfahren ein Verhältnis ermittelt, und zwar einen Mittelwert, aus einem Satz von Quotienten für Verschleißwerte in einem angegebenen Zeitfenster, wobei jeder der Quotienten der Quotient aus dem ersten bestimmten Drehmoment an einem vorgegebenen Antriebsvektor zu dem zweiten ermittelten Drehmoment an dem vorgegebenen Antriebsvektor ist.

10. Verfahren nach einem der vorherigen Ansprüche, wobei der Antriebsvektor folgendes umfasst:

   - eine Drehzahl des Antriebes (11),
   - die in Hydraulikflüssigkeitssorte,
   - einen ersten Druck (Pa) des Fluid, wobei der erste Druck der Druck ist, der in die hydrostatische Pumpe (12) am Arbeitsausgang anliegt,
   - einen zweiten Druck (Pb) des Fluid, wobei der zweite Druck der Druck ist, der in die hydrostatische Pumpe (12) eingespeist wird,
   - ein momentanes Fördervolumen der hydrostatischen Maschine (10),
   - eine Viskosität des Fluid, und/oder
   - eine Temperatur des Fluid.

11. Elektrohydrostatische Pumpenvorrichtung, umfassend eine hydrostatische Pumpe (12), einen Antrieb (11) mit variabler Drehzahl, Mittel zum Bestimmen eines ersten Drehmomentes des Antriebes (11) und eine elektronische Steuereinheit, die in der Lage ist, ein Verfahren nach einem der vorstehenden Verfahrensansprüche auszuführen.

12. Computerprogramm mit Programmcode für das Ausführen eines Verfahrens nach einem der vorherigen Verfahrensansprüche, wenn das Computerprogramm auf einem elektronischen Gerät ausgeführt wird.

**Claims**

1. Method (1) for determining a current state of wear of a hydrostatic machine (10) during operation of the hydrostatic machine (10), comprising a drive (11) with variable rotational speed and comprising a hydrostatic pump (12), the drive (11) being designed to drive the hydrostatic pump (12) in order to generate a volume flow rate of a fluid, and the hydrostatic machine (10) being connected to a fluid transport channel (20) of a hydraulic drive system in which the fluid is transported from the hydrostatic machine (10) to the hydraulic drive system in a driven manner, **characterized by** the following steps:

   determining (S1) a first torque of the drive (11) at a specified drive vector;
   ascertaining (S2) a second torque of the drive (11) at the specified drive vector using a first calculation method, the second torque being ascertained by means of a physical model for a hydrostatic machine which was not subject to wear influences; and
   determining (S3) the current state of wear of the hydrostatic machine (10) using a second calculation method, in order to correlate the first determined torque and the second ascertained torque with one another, correlating with one another being the acquisition of the ratio between the first determined torque of the drive and the second determined torque, and predetermined drive vectors representing a certain constellation of parameters stored in a lookup table to which the determined torque of a drive is assigned.

2. Method according to claim 1, wherein the step (S1) of determining a first torque of the drive (11) comprises ascertaining a product of a consumption of current of the drive (11) and a proportional factor.

3. Method according to claim 1, wherein the step (S1) of determining a first torque of the drive (11) comprises measuring the first torque using a torque sensor (40).

4. Method according to any of the preceding claims, wherein the first calculation method comprises the use of at least one lookup table, and a value for the second torque of the drive (11) is calculated from the lookup table.

5. Method according to any of the preceding claims, wherein the first calculation method comprises a physical model of the hydrostatic machine (10), and a value for the second torque of the drive (11) is derived from the physical model.

6. Method according to any of claims 4 to 5, wherein the first and/or the second calculation method is stored and executed locally in a control unit of the hydrostatic machine (10) as a computer program comprising program code.

7. Method according to any of the preceding claims, wherein the first calculation method comprises a multivariate regression for evaluating a D-dimensional grid using pairs of drive vectors and torque as measurement data.

8. Method according to any of the preceding claims, wherein the second calculation method ascertains a ratio, namely a quotient, of the first determined torque at a specified drive vector to the second ascertained torque at the specified drive vector.

9. Method according to any of the preceding claims, wherein the second calculation method ascertains a ratio, namely a mean value, from a set of quotients for wear values in a given time window, wherein each of the quotients is the quotient of the first determined torque at a specified drive vector to the second ascertained torque at the specified drive vector.

10. Method according to any of the preceding claims, wherein the drive vector comprises the following:

   - a rotational speed of the drive (11),
   - the in hydraulic fluid type,
   - a first pressure (Pa) of the fluid, wherein the first pressure is the pressure applied to the hydrostatic pump (12) at the working output,
   - a second pressure (Pb) of the fluid, wherein the second pressure is the pressure fed into the hydrostatic pump (12),
   - a current delivery volume of the hydrostatic machine (10),
   - a viscosity of the fluid, and/or
   - a temperature of the fluid.

11. Electrohydrostatic pump device comprising a hydrostatic pump (12), a drive (11) with variable rotational speed, means for determining a first torque of the drive (11), and an electronic control unit capable of performing a method according to any of the preceding method claims.

12. Computer program comprising program code for performing a method according to any of the preceding method claims when the computer program is executed on an electronic device.

**Revendications**

1. Procédé (1) permettant de déterminer un état d'usure momentané d'une machine hydrostatique (10) pendant le fonctionnement de la machine hydrostatique (10), comportant un entraînement (11) comportant une vitesse de rotation variable et une pompe hydrostatique (12), dans lequel l'entraînement (11) est conçu pour entraîner la pompe hydrostatique (12) pour la production d'un débit volumétrique d'un fluide, et dans lequel la machine hydrostatique (10) est raccordée à un canal de transport de fluide (20) d'un système d'entraînement hydraulique dans lequel le fluide, entraîné par la machine hydrostatique (10), est transporté vers le système d'entraînement hydraulique, **caractérisé par** les étapes suivantes :

   détermination (S1) d'un premier couple de rotation de l'entraînement (11) pour un vecteur d'entraînement prédéfini ;
   estimation (S2) d'un second couple de rotation de l'entraînement (11) pour le vecteur d'entraînement prédéfini en utilisant un premier procédé de calcul, dans lequel le second couple de rotation est estimé au moyen d'un modèle physique pour une machine hydrostatique qui n'a pas subi d'influences d'usure ; et
   détermination (S3) de l'état d'usure momentané de la machine hydrostatique (10) en utilisant un second procédé de calcul afin de mettre en relation le premier couple de rotation déterminé et le second couple de rotation estimé l'un avec l'autre,
   dans lequel la mise en relation de l'un avec l'autre est l'estimation du rapport entre le premier couple de rotation déterminé de l'entraînement et le second couple de rotation estimé et dans lequel les vecteurs d'entraînement prédéfinis représentent une constellation déterminée de paramètres, laquelle est stockée dans une table de consultation, auxquels est associé le couple de rotation déterminé d'un entraînement.

**2.** Procédé selon la revendication 1, dans lequel l'étape (S1) de détermination d'un premier couple de rotation de l'entraînement (11) comprend une estimation d'un produit à partir d'une consommation de courant de l'entraînement (11) et d'un facteur proportionnel.

**3.** Procédé selon la revendication 1, dans lequel l'étape (S1) de détermination d'un premier couple de rotation de l'entraînement (11) comprend une mesure du premier couple de rotation avec un capteur de couple de rotation (40).

**4.** Procédé selon l'une des revendications précédentes, dans lequel le premier procédé de calcul comprend l'utilisation d'au moins la table de consultation, et une valeur pour le second couple de rotation de l'entraînement (11) est calculée à partir de la table de consultation.

**5.** Procédé selon l'une des revendications précédentes, dans lequel le premier procédé de calcul comprend le modèle physique de la machine hydrostatique (10), et une valeur pour le second couple de rotation de l'entraînement (11) est déduite à partir du modèle physique.

**6.** Procédé selon l'une des revendications 4 à 5, dans lequel le premier et/ou le second procédé de calcul sont stockés et exécutés localement sur une unité de commande de la machine hydrostatique (10) sous forme de programme informatique comportant un code de programme.

**7.** Procédé selon l'une des revendications précédentes, dans lequel le premier procédé de calcul comprend une régression multivariée pour l'évaluation d'une grille à D dimensions en utilisant des paires de vecteurs d'entraînement et un couple de rotation comme données de mesure.

**8.** Procédé selon l'une des revendications précédentes, dans lequel le second procédé de calcul estime un rapport, à savoir un quotient du premier couple de rotation déterminé sur un vecteur d'entraînement prédéfini par le second couple de rotation estimé sur le vecteur d'entraînement prédéfini.

**9.** Procédé selon l'une des revendications précédentes, dans lequel le second procédé de calcul estime un rapport, à savoir une valeur moyenne, à partir d'un ensemble de quotients pour des valeurs d'usure dans une fenêtre temporelle définie, dans lequel chacun des quotients est le quotient entre le premier couple de rotation déterminé sur un vecteur d'entraînement prédéfini et le second couple de rotation estimé sur le vecteur d'entraînement prédéfini.

**10.** Procédé selon l'une des revendications précédentes, dans lequel le vecteur d'entraînement comprend les éléments suivants :

- une vitesse de rotation de l'entraînement (11),
- le dans un type de fluide hydraulique,
- une première pression (Pa) du fluide, dans lequel la première pression est la pression qui est appliquée dans la pompe hydrostatique (12) à la sortie de travail,
- une seconde pression (Pb) du fluide, dans lequel la seconde pression est la pression qui est injectée dans la pompe hydrostatique (12),
- un volume d'alimentation momentané de la machine hydrostatique (10),
- une viscosité du fluide, et/ou
- une température du fluide.

**11.** Dispositif formant pompe électrohydrostatique, comprenant une pompe hydrostatique (12), un entraînement (11) à vitesse de rotation variable, un moyen permettant de déterminer un premier couple de rotation de l'entraînement (11) et une unité de commande électronique qui est capable d'exécuter un procédé selon l'une des revendications précédentes.

**12.** Programme informatique comportant un code de programme pour l'exécution d'un procédé selon l'une des revendications précédentes, lorsque le programme informatique est exécuté sur un appareil électronique.

## FIG. 1

## FIG. 2

FIG. 3

**IN DER BESCHREIBUNG AUFGEFÜHRTE DOKUMENTE**

**In der Beschreibung aufgeführte Patentdokumente**

- WO 2019092122 A1
- DE 102011115650 A1
- EP 2655895 A1